# EUROPÄISCHE PATENTANMELDUNG

(11) **EP 2 977 587 A1**
(43) Veröffentlichungstag der Anmeldung: **27.01.2016**
(21) Anmeldenummer: 14180557.2
(22) Anmeldetag: 11.08.2014
(51) Int. Cl.: F02B 33/42, F04F 13/00

(54) **Druckwellenlader**

(30) Priorität: 24.07.2014 EP 14178435
(71) Anmelder: Antrova AG, 8260 Stein am Rhein (CH)
(72) Erfinder: Skopil, Mario, 8903 Birmensdorf (CH)
(74) Vertreter: Fenner, Seraina

(57) **Zusammenfassung**

Druckwellenlader (1) zum Verdichten von Frischluft (2a) für einen Verbrennungsmotor, umfassend ein Kaltgasgehäuse (6), ein Heissgasgehäuse (7) sowie ein dazwischen angeordnetes Rotorgehäuse (11), wobei innerhalb des Rotorgehäuses (11) ein rotierbarer Zellenrotor (8) angeordnet ist, und wobei das Heissgasgehäuse (7) einen Hochdruckabgaskanal (4) und einen Niederdruckabgaskanal (5) umfasst, und wobei das Kaltgasgehäuse (6) einen Frischluftkanal (2) und einen Ladeluftkanal (3) umfasst, und wobei der Hochdruckabgaskanal (4), der Niederdruckabgaskanal (5), der Frischluftkanal (2) und der Ladeluftkanal (3) Fluid leitend mit dem Zellenrotor (8) verbunden sind, wobei das Kaltgasgehäuse (6) ein Zellenrotorlager (14) umfasst, der Zellenrotor (8) mit einer Rotorwelle (12) verbunden ist, die Rotorwelle (12) im Zellenrotorlager (14) gelagert ist, und der Zellenrotor (8) in Verlaufsrichtung der Rotorwelle (12) geteilt ist und zumindest ein erstes Zellenrotorteil (8a) und ein zweites Zellenrotorteil (8b) umfasst.

## Beschreibung

Die Erfindung betrifft einen Druckwellenlader.

### Stand der Technik

Bei mit Verbrennungsmotoren betriebenen Fahrzeugen erfordert die Gesetzgebung zunehmend niedrigere Schadstoffemissionen und insbesondere einen geringen Kraftstoffverbrauch. Der Wandlungsprozess von Kraftstoffenergie in mechanische Energie unterliegt dabei dem ideellen Carnotprozess, so dass der Wirkungsgrad eines Verbrennungsmotors auf maximal ca. 40% begrenzt ist. Die restliche in dem Kraftstoff enthaltene Energie wird als Verlustwärme über den Motorblock des Verbrennungsmotors oder über das Abgas abgegeben. Um den Wirkungsgrades von Verbrennungsmotoren weiter zu steigern werden Verbrennungsmotoren aufgeladen. Hierbei wird die zum Verbrennungsprozess benötigte angesaugte Frischluft komprimiert, so dass ein höherer Füllungsgrad des Zylinders bei einem Ladungswechselvorgang erreicht wird. Der höhere Füllungsgrad des Zylinders mit Frischluft ermöglicht eine höhere Einspeisung, beispielsweise Einspritzung von Kraftstoff und somit eine Erhöhung der Verbrennungsleistung pro Verbrennungstakt, bei gleichbleibender Reibleistung des Verbrennungsmotors. Hierdurch steigt die effektive Leistung des Verbrennungsmotors, so dass es möglich ist für eine gleiche zur Verfügung gestellte Leistung einen hubraumschwächeren Motor einzusetzen und somit den Kraftstoffverbrauch sowie den CO₂-Ausstoss zu senken.

Als Verdichter zum Aufladen eines Verbrennungsmotors ist insbesondere ein Druckwellenlader geeignet. Der Druckwellenlader, wie dieser beispielsweise aus der Druckschrift EP0235609A1 bekannt ist, nutzt dabei im direkten Gaskontakt die Energie der Abgasströmung zur Verdichtung der angesaugten Frischluft und wird in der häufigsten Bauform mit einem rotierenden Zellenrotor ausgebildet. Um eine effektive Wirkungsgradsteigerung des Verbrennungsmotors zu erreichen ist es von zentraler Bedeutung, dass der Aufladeprozess mittels Druckwellenlader ebenfalls mit einem hohen Wirkungsgrad erfolgt.

Bekannte Druckwellenlader weisen den Nachteil auf, dass der Spalt zwischen dem rotierenden Zellenrotor und feststehenden Teilen relativ gross ausgestaltet ist, um während dem Betrieb des Druckwellenladers eine mechanische Beschädigung des rotierenden Zellrotors zu vermeiden. Dieser relativ grosse Spalt hat einen reduzierten Wirkungsgrad zur Folge, sowohl während dem Betrieb, insbesondere jedoch auch während dem Kaltstart. Die Offenlegungsschrift DE 102012101922A1 offenbart einen Druckwellenlader mit reduzierter Spaltbreite. Nachteilig an dieser Vorrichtung ist, dass diese eine Klemmneigung aufweist, sodass nach dem Auftreten eines Klemmens eine Reduzierung der Spaltbreite nicht mehr möglich ist.

### Darstellung der Erfindung

Aufgabe der Erfindung ist es einen Druckwellenlader mit erhöhtem Wirkungsgrad zu bilden.

Diese Aufgabe wird gelöst mit einem Druckwellenlader aufweisen die Merkmale von Anspruch 1. Die Unteransprüche 2 bis 15 betreffen weitere vorteilhafte Ausgestaltungen.

Die Aufgabe wird insbesondere gelöst mit einem Druckwellenlader zum Verdichten von Frischluft für einen Verbrennungsmotor, umfassend ein Kaltgasgehäuse, ein Heissgasgehäuse sowie ein dazwischen angeordnetes Rotorgehäuse, wobei innerhalb des Rotorgehäuses ein rotierbarer Zellenrotor angeordnet ist, und wobei das Heissgasgehäuse einen Hochdruckabgaskanal und einen Niederdruckabgaskanal umfasst, und wobei das Kaltgasgehäuse einen Frischluftkanal und einen Ladeluftkanal umfasst, und wobei der Hochdruckabgaskanal, der Niederdruckabgaskanal, der Frischluftkanal und der Ladeluftkanal Fluid leitend mit dem Zellenrotor verbunden sind, und wobei das Kaltgasgehäuse ein Zellenrotorlager umfasst, wobei der Zellenrotor mit einer Rotorwelle verbunden ist, wobei die Rotorwelle im Zellenrotorlager gelagert ist, und wobei der Zellenrotor in Verlaufsrichtung der Rotorwelle geteilt ist und zumindest ein erstes Zellenrotorteil und ein zweites Zellenrotorteil umfasst.

Ein Druckwellenlader und insbesondere dessen Zellenrotor muss derart ausgestaltet sein, dass auch bei hohen Temperaturschwankungen ein sicherer und zuverlässiger Betrieb gewährleistet ist. So weist ein Druckwellenlader beispielsweise beim Start eines Kraftfahrzeuges Umgebungstemperatur auf. Das vom Verbrennungsmotor in den Zellenrotor einzuströmende Abgas weist während dem Betrieb eine Abgastemperatur von bis zu etwa 1050 °C auf, was eine thermisch bedingte Längsausdehnung des Zellenrotors zur Folge hat.

Der erfindungsgemässe Druckwellenlader umfasst einen in Verlaufsrichtung der Rotorwelle geteilten Zellenrotor, mit zumindest einem ersten und einem zweiten Zellenrotorteil, sodass sich zwischen dem ersten und dem zweiten Zellenrotorteil in Verlaufsrichtung der Rotorwelle vorzugsweise ein Spalt ausbildet. Der Spalt weist in einer vorteilhaften Ausgestaltung bei Umgebungstemperatur eine Breite von maximal 0,5 mm auf. In einer vorteilhaften Ausgestaltung ist der Spalt in der Mitte des Zellenrotors angeordnet.

Der erfindungsgemässe Zellenrotor ist derart ausgestaltet, dass die temperaturbedingte Längenausdehnung zur Folge hat, dass sich der Spalt während dem Erwärmen verkleinert beziehungsweise während dem Abkühlen vergrössert. Ein Druckwellenlader aufweisend einen derart ausgestalteten Zellenrotor weist in einer besonders vorteilhaften Ausgestaltung die Eigenschaft auf, dass der Spalt zwischen der Stirnseite des Zellenrotors und der Stirnseite des Heissgasgehäuses temperaturunabhängig dieselbe oder im Wesentlichen dieselbe Spaltbreite aufweist, wobei diese Spaltbreite vorteilhafterweise sehr klein gehalten werden kann, vorzugsweise in einem Bereich von 0,05 bis 0,2 mm liegt, vorzugsweise bei etwa 0,1 mm. Diese geringe Spaltbreite hat zur Folge, dass im Bereich zwischen der Stirnseite des Zellenrotors und der Stirnseite des Heissgasgehäuses kaum oder ein nur geringer Druckverlust entsteht. Ein derartiger Druckwellenlader 1 weist beispielsweise gute Kaltstarteigenschaften auf, da der Ladedruck auch bei kaltem Motor sehr schnell aufgebaut werden kann.

In einer vorteilhaften Ausgestaltung ist die Rotorwelle des Zellenrotors nur einseitig im Kaltgasgehäuse durch ein erstes Lager gelagert. Eine derartige Anordnung wird auch als fliegende Lagerung des Zellenrotors bezeichnet. In einer weiteren vorteilhaften Ausgestaltung ist die Rotorwelle beidseits gelagert, sowohl im Kaltgasgehäuse als auch durch ein zweites Lager im Heissgasgehäuse.

In einer weiteren vorteilhaften Ausgestaltung besteht der Zellenrotor aus einer Vielzahl von in Längsrichtung nacheinander folgend angeordneten Zellenrotorteilen, beispielsweise im Bereich von 3 bis 30 Zellenrotorteilen, wobei benachbart angeordneten Zellenrotorteile vorzugsweise über einen Spalt gegenseitig beabstandet sind. Das erste, dem Heissgasgehäuse zugewandte Zellenrotorteil besteht aus einem warmfesten Metall, vorzugsweise einem hitzebeständigen Stahl. Die danach nachfolgenden Zellenrotorteile erfordern nicht mehr eine derart hohe Warmfestigkeit, sodass diese Zellenrotorteile beispielsweise auch aus einem Kunststoff bestehen könnten.

In einer weiteren vorteilhaften Ausgestaltung umfasst der Druckwellenlader einen Wärmetaucher, der derart angeordnet und ausgestaltet ist, dass dieser zumindest das im Heissgasgehäuse angeordnete zweite Lager für den Zellenrotor kühlt. In einer besonders vorteilhaften Ausgestaltung wird im Heissgasgehäuse zudem der vom Verbrennungsmotor zuströmende Hochdruckabgasstrom kühlt. Die Kühlung des zuströmenden Abgasstroms im Heissgasgehäuse hat zur Folge, dass das Heissgasgehäuse eine tiefere Temperatur aufweist, und dass der Abgasstrom mit einer tieferen Temperatur in das Zellenrad einströmt, sodass auch das Zellenrad eine tiefere Betriebstemperatur aufweist. Dies hat zur Folge, dass sowohl das Heissgasgehäuse als auch das Zellenrad während dem Erwärmen eine geringere Ausdehnung erfährt, beziehungsweise während dem Abkühlen ein geringeres Zusammenziehen aufweist. Die Kühlung ermöglich es ein zweites Lager für den Zellenrotor im Heissgasgehäuse anzuordnen. Dadurch ist es möglich den Zellenrotor im zweiten Lager zu lagern, sodass die Stirnseite des Zellenrotors eine definierte Lage aufweist, und dadurch der Spalt zwischen der Stirnseite des Zellenrotors und der Stirnseite des Heissgasgehäuses klein gehalten werden kann. In der vorteilhaftesten Ausgestaltung ist der Zellenrotor beidseitig gelagert, in einem zweiten Lager im Heissgasgehäuse, und in einem ersten Lager im Kaltgasgehäuse. In einer vorteilhaften Ausgestaltung sind das erste Lager und/oder das zweite Lager zudem geschmiert, insbesondere ölgeschmiert oder fettgeschmiert. Die beidseitige Lagerung des Zellenrotors ermöglicht eine Abkehr von der bisher bekannten fliegenden Lagerung des Zellenrotors, welche den Nachteil hatte, dass sich eine trompetenförmige Verformung des Rotors bei hohen Temperaturen und Drehzahlen ergab.

Der erfindungsgemässe Druckwellenlader weist den Vorteil auf, dass keine oder kaum eine trompetenförmige Verformung des Zellenrotors mehr auftritt. Der erfindungsgemässe Druckwellenlader weist den Vorteil auf, dass das Kaltspiel zwischen Zellenrotor und Heissgasgehäuse äusserst klein gehalten werden kann, und die Spaltbreite vorzugsweise in einem Bereich von 0,05 bis 0,2 mm liegt, vorzugsweise bei etwa 0,1 mm. Der erfindungsgemässe Druckwellenlader weist auf Grund dieser geringen Spaltbreite den Vorteil auf, dass die Kaltstarteigenschaften wesentlich verbessert sind, da der Druckwellenlader auf Grund der geringen Spaltbreite bereits während der Kaltstartphase einen genügend hohen Ladedruck erzeugen kann. Der erfindungsgemässe Druckwellenlader erzeugt bereits bei einer Temperatur im Bereich von beispielsweise etwa 200 °C einen genügend hohen Ladedruck.

In einer vorteilhaften Ausgestaltung wird die Kühlleistung des Wärmetauschers derart geregelt, dass während dem Kaltstart nur mit einer geringen Kühlleistung oder gar nicht gekühlt wird, damit der Druckwellenlader in möglichst kurzer Zeit auf die erforderliche Betriebstemperatur von beispielsweise etwa 200°C gelangt. Die Kühlleistung wird ab einer gewissen Betriebstemperatur, beispielsweise ab 300°C, erhöht, um das einströmende Abgas zu kühlen.

In einer besonders vorteilhaften Ausgestaltung ist der Wärmetauscher zudem derart ausgestaltet, dass dieser auch den aus dem Druckwellenlader ausströmenden Abgasstrom kühlt, vorzugsweise indem der Niederdruckabgaskanal gekühlt wird.

Der erfindungsgemässe Druckwellenlader weist den weiteren Vorteil auf, dass eine Nachentzündung unverbrannter Kohlenwasserstoffe in der Auspuffanlage nicht oder kaum mehr auftritt, da die Temperatur des der Auspuffanlage zugeleiteten Abgasstroms und vorzugsweise auch die Temperatur des Heissgasgehäuses deutlich reduziert ist. So kann der das Heissgasgehäuse verlassende Abgasstrom beispielweise eine Temperatur von etwa 700 °C oder eine Temperatur von unter 700 °C aufweisen. Das Heissgasgehäuse kann an der Oberfläche beispielsweise eine Temperatur von etwa 120 °C aufweisen. Vorteilhafterweise ist der Wärmetauscher als im Heissgasgehäuse verlaufende Kanäle ausgestaltet, durch welche als Kühlmedium Wasser fliesst. Ein derart ausgestalteter Wärmetauscher ist besonders geeignet das Heissgasgehäuse zu kühlen, sodass es beispielsweise möglich ist das Heissgasgehäuse aus Aluminium oder einer Aluminiumlegierung zu bilden. Ein Heissgasgehäuse gefertigt aus einem derartigen Metall nimmt während dem Betrieb keinen thermischen Schaden, da das Metall eine hohe Wärmeleitung aufweist, und das Heissgasgehäuse derart gekühlt wird, dass keine Überhitzung auftritt.

Der erfindungsgemässe Druckwellenlader weist zudem den Vorteil auf, dass durch die Kühlung des Abgasstroms der Volumenstrom des Abgases reduziert wird, was zur Folge hat, dass entweder die Dimension der Abgasleitungen im Druckwellenlader reduziert werden kann, oder dass ein bestehender Druckwellenlader mit erhöhter Abgasförderkapazität betrieben werden kann.

Der erfindungsgemässe Druckwellenlader weist zudem den Vorteil auf, dass dieser mit weniger temperaturfesten Werkstoffen und somit mit günstigeren Werkstoffen ausgebildet werden kann, insbesondere das Heissgasgehäuse und das Kaltgasgehäuse, jedoch auch der Zellenrotor. In einer besonders vorteilhaften Ausgestaltung wird zumindest das Heissgasgehäuse aus Aluminium, einer Aluminiumlegierung oder einer sonstigen Leichtmetalllegierung ausgestaltet, um ein gewichtsmässig leichteres Heissgasgehäuse auszubilden, und um vorzugsweise ein Heissgasgehäuse mit erhöhter Wärmeleitfähigkeit auszubilden. Ein derartiger Druckwellenlader weist den Vorteil auf, dass dieser besonders leicht ausgestaltet ist, und dass der Abgasstrom besonders effizient gekühlt werden kann. Ein Heissgasgehäuse aus Aluminium oder einer entsprechenden Legierung weist den Vorteil auf, dass dieses sich sehr schnell erwärmt, sodass der Druckwellenlader bei einem Kaltstart in sehr kurzer Zeit die erforderliche Betriebstemperatur aufweist. Ein Verbrennungsmotor ausgerüstet mit einem erfindungsgemässen Druckwellenlader weist somit vorteilhafte Kaltstarteigenschaften auf. Dies hat zur Folge, dass der Druckwellenlader, beispielsweise bei einem Benzinmotor mit kleinem Hubraum, sehr schnell nach dem Kaltstart Wirkung zeigt, was beispielsweise ein besseres Beschleunigungsverhalten und eine geringere Schadstoffemission zur Folge hat.

Der Wärmetauscher umfasst vorteilhafterweise eine Wasserkühlung, insbesondere derart, dass im Heissgasgehäuse Kühlkanäle angeordnet sind, welche vom Kühlwasser durchströmt sind.

Der Zellenrotor ist vorteilhafterweise aktiv angetrieben, beispielsweise durch einen Riemenantrieb, oder insbesondere durch einen Elektromotor, der vorteilhafterweise im Kaltgasgehäuse angeordnet ist.

### Kurze Beschreibung der Zeichnungen

Die zur Erläuterung der Ausführungsbeispiele verwendeten Zeichnungen zeigen:
- Fig. 1: einen Längsschnitt durch einen schematisch dargestellten Druckwellenlader;
- Fig. 2: eine Prinzipdarstellung der Gasführung im Zellenrad;
- Fig. 3: eine Seitenansicht eines geteilten Zellenrades;
- Fig. 4: einen Längsschnitt durch ein geteiltes Zellenrad;
- Fig. 5: einen Längsschnitt durch ein weiteres Ausführungsbeispiel eines geteilten Zellenrads;
- Fig. 6: einen Längsschnitt durch ein weiteres Ausführungsbeispiel eines geteilten Zellenrads;
- Fig. 7: einen Längsschnitt durch ein weiteres Ausführungsbeispiel eines schematisch dargestellten Druckwellenladers;
- Fig. 8: eine Frontansicht eines Heissgasgehäuses;
- Fig. 9: eine Seitenansicht eines Druckwellenladers;
- Fig. 10: einen Schnitt durch den Druckwellenlader entlang der Schnittlinie A-A gemäss Figur 9.

Grundsätzlich sind in den Zeichnungen gleiche Teile mit gleichen Bezugszeichen versehen.

### Wege zur Ausführung der Erfindung

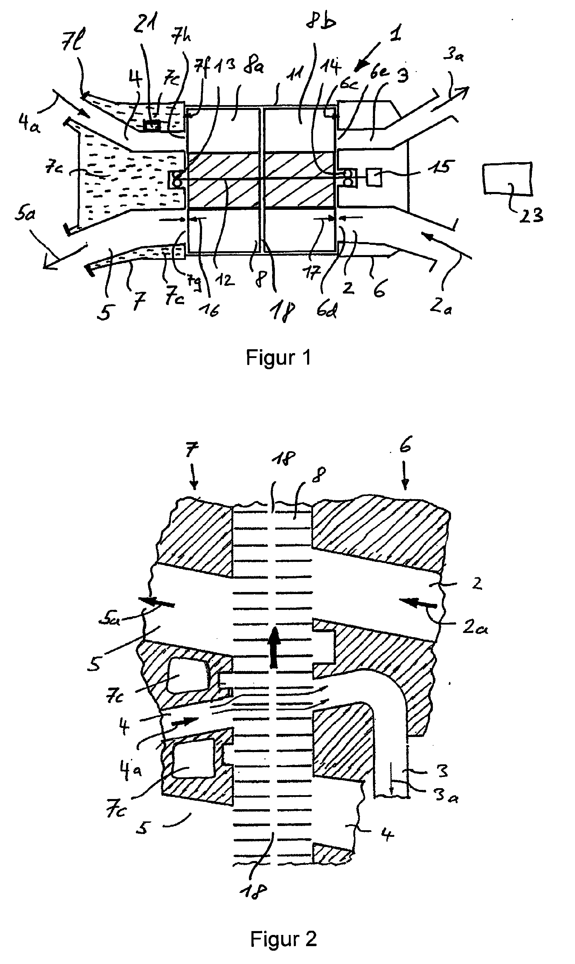

Fig. 1 zeigt schematisch einen Druckwellenlader 1 zum Verdichten von Frischluft 2a für einen nicht dargestellten Verbrennungsmotor, dem eine verdichtete Frischluft, auch als Ladeluft 3a bezeichnet, zugeführt wird. Der Druckwellenlader 1 umfasst ein Kaltgasgehäuse 6, ein Heissgasgehäuse 7 sowie ein dazwischen angeordnetes Rotorgehäuse 11, wobei innerhalb des Rotorgehäuses 11 ein rotierbarer Zellenrotor 8 angeordnet ist. Der Zellenrotor 8 umfasst ein erstes und ein zweites Zellenrotorteil 8a, 8b, welche unter Ausbildung eines Spaltes 18 gegenseitig beabstandet sind. Der Zellenrotor 8 umfasst eine Rotorwelle 12 oder ist mit einer Rotorwelle 12 verbunden, welche an beiden Enden in je einem zweiten beziehungsweise einem ersten Lager 13,14 drehbar gelagert ist. Das zweite Lager 13 ist im Heissgasgehäuse 7 angeordnet, wogegen das erste Lager 14 im Kaltgasgehäuse 6 angeordnet ist. Das Heissgasgehäuse 7 umfasst einen Hochdruckabgaskanal 4 und einen Niederdruckabgaskanal 5, wobei der vom Motor einströmende Hochdruckabgasstrom 4a dem Hockdruckabgaskanal 4 zugeführt wird, und wobei der aus dem Niederdruckabgaskanal 5 ausströmende Niederdruckabgasstrom 5a einem Auspuff zugeleitet wird. Das Kaltgasgehäuse 6 umfasst einen Frischluftkanal 2 und einen Ladeluftkanal 3. Das Kaltgasgehäuse 6 könnte in einer weiteren Ausführungsform auch mehrere Frischluftkanäle 2 und mehrere Ladeluftkanäle 3 umfassen, vorzugsweise je zwei. Das Heissgasgehäuse 7 könnte in einer weiteren Ausführungsform auch mehrere Hochdruckabgaskanäle 4 und mehrere Niederdruckabgaskanäle 5 umfassen, vorzugsweise je zwei. Der Hochdruckabgaskanal 4, der Niederdruckabgaskanal 5, der Frischluftkanal 2 und der Ladeluftkanal 3 sind in der für einen Druckwellenlader üblich, jedoch nur schematisch dargestellten Anordnung Fluid leitend mit dem Zellenrotor 8 verbunden ist, um die angesaugte Frischluft 2a mit Hilfe des Hochdruckabgasstroms 4a zu verdichten und als Ladeluft 3a dem Verbrennungsmotor zuzuführen. Das Heissgasgehäuse 7 weist an der zum Zellenrotor 8 hin ausgerichteten Stirnseite 7f eine Einlassöffnung 7h sowie eine Auslassöffnung 7g auf. Zwischen dieser Stirnseite 7f und dem Zellenrotor 8 besteht ein Spalt 16. Der Spalt 16 weist vorzugsweise eine Breite im Bereich von 0,05 bis 0,2 mm auf, und insbesondere eine Breite von etwa 0,1 mm. Das Kaltgasgehäuse 6 weist an der zum Zellenrotor 8 hin ausgerichteten Stirnseite 6c eine Einlassöffnung 6d sowie eine Auslassöffnung 6e auf. Zwischen dieser Stirnseite 6c und dem Zellenrotor 8 besteht ein Spalt 17.

Das Heissgasgehäuse 7 umfasst einen schematisch dargestellten Wärmetauscher 7c, wobei der Wärmetauscher 7c derart ausgestaltet ist, dass zumindest das zweite Lager 13 gekühlt wird. Besonders vorteilhaft ist der Wärmetauscher 7c derart ausgestaltet, dass auch der Hochdruckabgaskanal 4 kühlbar ist, und somit der durch den Hochdruckabgaskanal 4 strömende Hochdruckabgasstrom 4a gekühlt wird. Der Kühlstrom ist vorzugsweise derart im Wärmetauscher 7c geleitet, dass das Kühlmittel zuerst das zweite Lager 13 kühlt und danach dem Hochdruckabgaskanal 4 zugeleitet wird um diesen zu kühlen. Das Kühlmittel fliesst vorzugsweise in Kühlkanälen, die sich in der Aussenwand des Hochdruckabgaskanals 4 befinden. In einer weitere vorteilhaften Ausgestaltung ist der Wärmetauscher 7c derart ausgestaltet, dass zudem auch der Niederdruckabgaskanal 5 kühlbar ist, sodass der durch diesen Kanal strömende Niederdruckabgasstrom 5a gekühlt wird. Als Kühlmittel wird vorzugsweise Wasser verwendet. In einer vorteilhaften Ausgestaltung sind die Kühlkanäle mit dem Wasserkreislauf eines Verbrennungsmotors verbunden, sodass dieser das Kühlwasser liefert und die Umwälzung bewirkt. Die Rotorwelle 12 ist im dargestellten Ausführungsbeispiel von einem im Kaltgasgehäuse 6 angeordneten Elektromotor 15 angetrieben. Die Rotorwelle 12 könnte beispielsweise auch von einem Riemenantrieb angetrieben sein.

In einer vorteilhaften Ausgestaltung ist im Druckwellenlader 1 ein Sensor 21 angeordnet zur Erfassung der Temperatur des Hochdruckabgasstroms 4a, der Temperatur des Niederdruckabgasstroms 5a, oder einer damit zusammenhängenden Grösse, wobei der Sensor 21 Signal übertragend mit einer Regelvorrichtung 23 verbunden ist. Der Wärmetauscher 7c ist Fluid leitend mit einer nicht dargestellten Wärmeabgabevorrichtung verbunden, sodass ein Wasserkreislauf ausgebildet wird, der auch eine nicht dargestellte Umwälzpumpe umfasst. In einer bevorzugten Ausgestaltung ist die Umwälzpumpe von der Regelvorrichtung 23 ansteuerbar, sodass die Kühlleistung des Wärmetauschers 7c ansteuerbar ist, vorzugsweise in Abhängigkeit einer vom Sensor 21 gemessenen Temperatur.

In einem vorteilhaften Verfahren erfolgt während eines Kaltstartes keine oder nur eine reduzierte Kühlung des Wärmetauschers 7c, sodass während einer ersten Startphase S1 keine oder eine nur reduzierte Kühlung erfolgt, bis der Druckwellenlader 1, insbesondere der Hochdruckabgasstrom oder der Niederdruckabgasstrom eine Minimaltemperatur Tₘᵢₙ aufweist, und dass die Kühlleistung des Wärmetauschers 7c danach erhöht wird. Dieses Verfahren weist den Vorteil auf, dass der Druckwellenlader während dem Kaltstart schnell erwärmt wird, und deshalb schnell die erforderliche Druckleistung erbringt. In einem weiteren vorteilhaften Verfahren wird die Kühlleistung des Wärmetauschers bei einem Kaltstart während einer vorgegebenen Startzeitdauer Tₛₜ reduziert oder der Wärmetauscher 7c wird ausgeschaltet, und die Kühlleistung des Wärmetauschers 7c wird nach Ablauf der Startzeitdauer Tₛₜ erhöht.

Figur 2 zeigt in einer Prinzipdarstellung die Gasführung in einem Druckwellenlader 1 mit geteiltem Zellenrad 8 aufweisend den Spalt 18. In dem rotierenden Zellenrotor 8 strömen durch den Frischluftkanal 2 angesaugte Frischluft 2a und durch den Hochdruckabgaskanal 4 das von dem Verbrennungstakt kommende Abgas 4a. Die angesaugte Frischluft 2a wird von dem Druck des Abgases 4a komprimiert und anschließend über den Ladeluftkanal 3 dem Verbrennungsmotor auf einer Ansaugseite zugeführt, und strömt dann in den Zylinder in dem ein Ladungswechselvorgang stattfindet, und wird dort mit Kraftstoff vermengt und verbrannt. Im Anschluss daran wird das Abgas 4a durch den Hochdruckabgaskanal 4 dem Druckwellenlader 1 wiederum zugeführt. Nach der Verdichtung der Frischluft 2a durch das Abgas 4a wird das nicht mehr benötigte Abgas 5a in einen Niederdruckabgaskanal 5 entlassen und dem weiteren Abgasstrang zugeführt.

Im Heissgasgehäuse 7 verläuft ein Hochdruckabgaskanal 4, welcher dem Zellenrotor 8 zugeführt ist. Im Heissgasgehäuse 7 ist zudem ein Wärmetauscher 7c angeordnet, der im dargestellten Ausführungsbeispiel als Wasserkanäle 7d ausgestaltet ist, welche den Hochdruckabgaskanal 4 umgeben um dessen Innenwände zu kühlen und um dadurch den durchströmenden Hochdruckabgasstrom 4a zu kühlen. Im dargestellten Ausführungsbeispiel ist der Wärmetauscher 7c beziehungsweise die Wasserkanäle 7d Teil des Heissgasgehäuses 7. In einer bevorzugten, nicht dargestellten Ausgestaltung sind die Wasserkanäle 7d zuerst demjenigen Bereich des Heissgasgehäuses 7 zugeleitet, in welchem das erste Lager 13 angeordnet ist, um zuerst das erste Lager 13 zu kühlen, bevor derjenige Teil des Heissgasgehäuses 7 gekühlt wird, welcher den Hochdruckabgaskanal 4 umschliesst. In einer vorteilhaften, nicht dargestellten Ausführungsform, könnten auch im Bereich des Niederdruckabgaskanals 5 ein Wärmetauscher 7c, insbesondere Wasserkanäle 7d angeordnet sein, um den Niederdruckabgasstrom 5a zu kühlen.

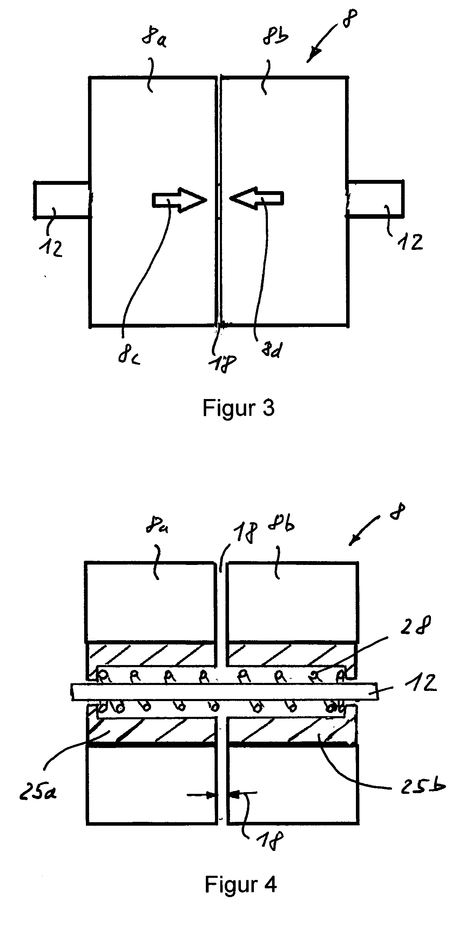

Figur 3 zeigt eine Seitenansicht eines geteilten Zellenrotors 8, der in Verlaufsrichtung der Rotorwelle 12 zweiteilig ausgestaltet ist und ein erstes Zellenrotorteil 8a und ein zweites Zellenrotorteil 8b aufweist. Die Zellenrotorteile 8a, 8b sind derart mit der Rotorwelle 12 verbunden, dass diese bei einer Erwärmung nur zur Mitte hin eine Ausdehnungsbewegung 8c, 8d aufweisen, sodass sich die Spaltbreite 18 reduziert. Vorzugsweise verändert sich die Lage der Zellenrotorteile 8a, 8b bezüglich der Rotorwelle 12 zur Stirnseite des Zellenrotors 8 nicht, sodass eine konstante oder im Wesentlichen konstante Spaltbreite zwischen der Stirnfläche des Heissgasgehäuses, und dem Zellenrotor gewährleistet ist.

Figur 4 zeigt einen Zellenrotor 8 umfassend ein erstes Zellenrotorteil 8a mit einem ersten Lagerteil 25a und ein zweites Zellenrotorteil 8b mit einem zweiten Lagerteil 25b, wobei die beiden Zellenrotorteile 8a, 8b beziehungsweise die beiden Lagerteile 25a, 25b einen gegenseitigen Spalt 18 ausbilden. Die Lagerteile 25a, 25b sind bezüglich der Rotorwelle 12 verschiebbar gelagert. Die Lagerteile 25a, 25b weisen eine Ausnehmung auf, innerhalb welcher eine gespannte Feder 28 angeordnet ist, welche die beiden Lagerteile 25a, 25b und damit die beiden Zellenrotorteile 8a, 8b voneinander wegdrückt, sodass die Zellenrotorteile 8a, 8b mit deren Stirnseiten an der Stirnseite 7f des Heissgasgehäuses 7 beziehungsweise an der Stirnseite 6c des Kaltgasgehäuses 6 beinahe anliegt, sodass sich dazwischen nur ein geringer Spalt 16 ausbildet. Eine Erwärmung des Zellenrotors 8 hat zur Folge, dass sich die Zellenrotorteile 8a, 8b ausdehnen, sodass sich der Spalt 18 verkleinert. Eine Abkühlung des Zellenrotors 8 hat zur Folge, dass sich der Spalt 18 vergrössert. Die in Figur 4 dargestellte Ausführungsform weist den Vorteil auf, dass der Spalt 16 zwischen der Stirnseite 7f des Heissgasgehäuses 7 und dem ersten Zellenrotorteil 8a konstant oder im Wesentlichen konstant bleibt, unabhängig von der Temperatur des Zellenrotorteils 8a, da die sich auf Grund der Erwärmung ergebende Änderung der Länge des Zellenrotorteils 8a bezüglich der Breite des Spaltes 18 auswirkt.

In einer vorteilhaften Ausgestaltung besteht das erste Zellenrotorteil 8a aus einem wärmefesteren Material als das zweite Zellenrotorteil 8b. Während dem Betrieb den Druckwellenladers 1 könnte das erste Zellenrotorteil 8a beispielsweise eine Temperatur von etwa 800 °C aufweisen, wogegen das zweite Zellenrotorteil 8b eine Temperatur von nur etwa 200°C aufweist. Der Spalt 18 verhindert eine durchgehende Wärmeleitung in Verlaufsrichtung des Zellenrotors 8, sodass die Zellenrotorteile 8a, 8b stark unterschiedliche Temperaturen aufweisen können. Daher ist es auch möglich das zweite Zellenrotorteil 8b aus einem reduziert wärmefesten Material zu fertigen, beispielsweise auch aus einem Kunststoff. Ein derartiger Zellenrotor 18 ist kostengünstiger und vorzugsweise auch leichter.

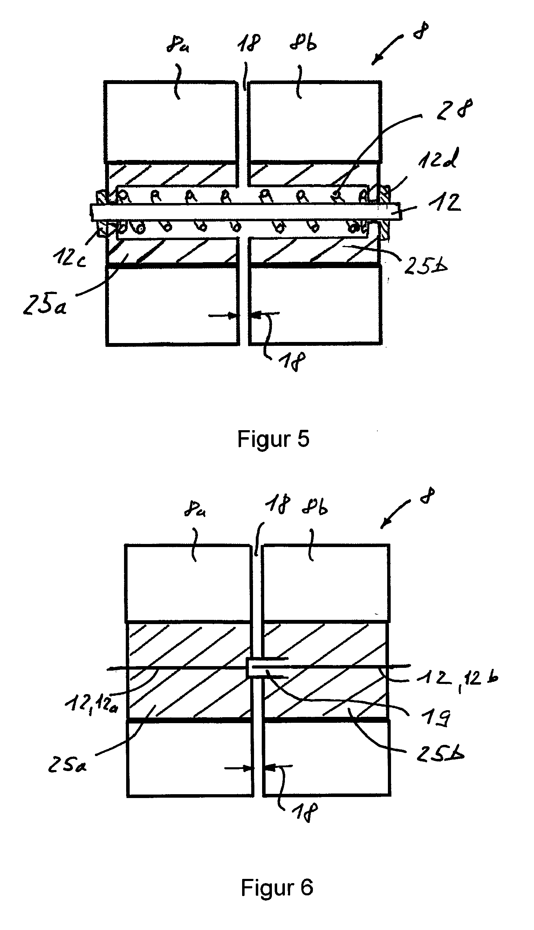

Figur 5 zeigt ein weiteres Ausführungsbeispiel eines Zellenrotors 8, wobei dieser im Unterschied zu dem in Figur 4 dargestellten Ausführungsbeispiel Anschläge 12c, 12d aufweist, welche fest mit dem Rotor 12 verbunden sind, sodass der maximal mögliche Verschiebungsweg der beiden Zellenrotorteile 8a, 8b in Verlaufsrichtung des Rotor 12 durch die Anschläge 12c, 12d begrenzt ist. Die beiden Zellenrotorteile 8a, 8b könnten in einem möglichen Ausführungsbeispiel zum Spaltes 18 hin Endabschnitte aufweisen, die sich in Verlaufsrichtung des Rotors 12 gegenseitig überlappen und dadurch eine Dichtung ausbilden. Diese Dichtung könnte beispielsweise als eine Labyrinthdichtung ausgestaltet sein. Alle hierin dargestellten Ausführungsbeispiele von Zellenrotoren 8 könnten derart ausgestaltet sein.

Figur 6 zeigt ein weiteres Ausführungsbeispiel eines Zellenrotors 8, der in Verlaufsrichtung der Rotorwelle 12 zumindest zweiteilig ausgestaltet ist und ein erstes Zellenrotorteil 8a mit einer ersten Rotorteilwelle 12a und ein zweites Zellenrotorteil 8b mit einer zweiten Rotorteilwelle 12b umfasst, wobei die beiden Zellenrotorteile 8a, 8b beziehungsweise die beiden Rotorteilwellen 12a, 12b über eine Kupplung 19 miteinander verbunden sind. Die beiden Zellenrotorteile 7a, 7b weisen einen Rotorspalt 17 auf. Eine Temperaturveränderung des Zellenrotors 7 hat eine Veränderung der Spaltbreite 18 zur Folge.

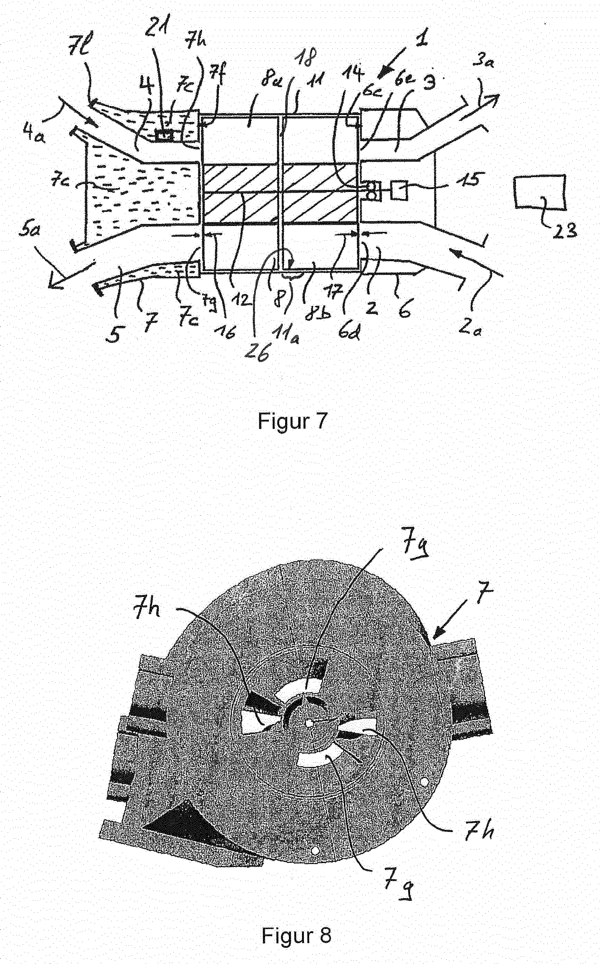

Figur 7 zeigt ein Ausführungsbeispiel eines Druckwellenladers 1 mit einem fliegend gelagerten Zellenrotor 8. Im Unterschied zu dem in Figur 1 dargestellten Druckwellenlader 1 ist bei dem in Figur 7 dargestellten Druckwellenlader die Rotorwelle 12 nur rechts in einem ersten Lager 14 im Kaltgasgehäuse 6 gelagert. Die Rotorwelle 12 ist am linken Ende nicht gelagert.

Der Druckwellenlader 1 könnte auch derart ausgestaltet sein, dass das zweite Zellenrotorteil 8b sowie ein das zweite Zellenrotorteil 8b umschliessender Abschnitt 11a des Rotorgehäuses 11 derart gegenseitig angepasst ausgestaltet sind, dass das zweite Zellenrotorteil 8b sowie der umschliessende Abschnitt 11a gegenseitig eine Labyrinthdichtung 26 ausbilden.

Figur 8 zeigt die Stirnseite 7f eines Heissgasgehäuses 7, wobei an der Stirnseite 7f, in Umfangsrichtung beabstandet, nacheinander folgend eine Einlassöffnung 7h und nachfolgend eine Auslassöffnung 7g angeordnet ist, wobei nachfolgend nochmals eine Einlassöffnung 7h und nachfolgend eine Auslassöffnung 7g angeordnet sind. Ein Druckwellenlader 1 umfassend das in Figur 5 dargestellte Heissgasgehäuse 7 ist derart ausgestaltet, dass dieser eine Gasführung aufweist, welche aus zwei übereinander angeordneten Gasführungen besteht, wie diese in Figur 2 dargestellt ist.

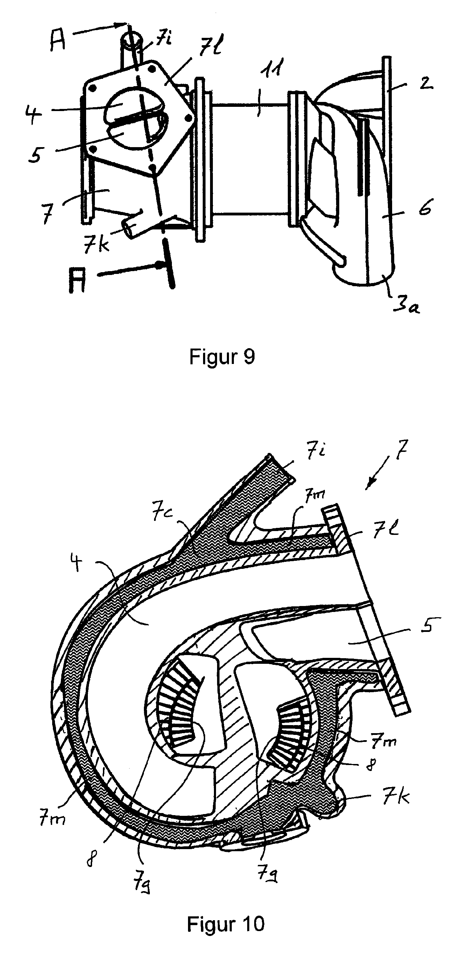

Figur 9 zeigt in einer Seitenansicht ein weiteres Ausführungsbeispiel eines Druckwellenladers 1 mit Heissgasgehäuse 7, Rotorgehäuse 11 und Kaltgasgehäuse 6, wobei das Heissgasgehäuse 7 einen Flansch 71 umfasst, an dem der Hochdruckabgaskanal 4 und der Niederdruckabgaskanal 5 mündet. Zudem ist ein Kühlwassereinlass 7i sowie ein Kühlwasserauslass 7k dargestellt, über welche ein Kühlwasseraustausch mit dem im Heissgasgehäuse 7 angeordneten Wärmetauscher 7c stattfindet. Figur 10 zeigt einen Schnitt durch Figur 6 entlang der Schnittlinie A-A. Der Hochdruckabgaskanal 4 sowie der Niederdruckabgaskanal 5 sind zumindest teilweise von einem Wassermantel 7m umgeben, der sich innerhalb des Wärmetauschers 7c befindet, wobei das Wasser über die Zu- und Ableitung 7i, 7k ausgetauscht und ausserhalb des Heissgasgehäuses 7 gekühlt wird. Das Heissgasgehäuse 7 ist vorzugsweise abschnittweise doppelwandig ausgestaltet, um zwischen den beabstandeten Wänden den Wärmetauscher 7c auszubilden. Aus Figur 7 sind zudem die zwei Auslassöffnungen 7g sowie ein Teil des dahinter angeordneten Zellenrades 8 ersichtlich.

Die Kühlvorrichtung umfassend den Wärmetauscher 7c kann auf unterschiedliche Weise ausgestaltet sein, und könnte zum Beispiel auch als Dampfkreislauf ausgestaltet sein, mit heat pipes und einem Dampfkreislauf mit Phasenveränderung.

Die Kühlung des Druckwellenladers 1 hat zur Folge, dass dieser während dem Betrieb eine tiefere Temperatur aufweist. Dies ergibt den Vorteil, dass zur Dichtung zwischen dem Kaltgehäuse 6 und dem Rotorgehäuse 11 und/oder zwischen dem Heissgasgehäuse 7 und dem Rotorgehäuse 11 Dichtring 27 zur Abdichtung verwenden werden können, wobei die Dichtringe 27 aus Metall oder Kunststoff bestehen.

Es kann sich zudem als vorteilhaft erweisen einen zusätzlichen Wärmetauscher anzuordnen, um eine Hochdruckabgaszufuhrleitung zu kühlen, wobei die Hochdruckabgaszufuhrleitung im Abgasflussrichtung vorgängig dem Hochdruckabgaskanal 4 angeordnet ist.

Der erfindungsgemässe Zellenrotor 8 ist in den dargestellten Ausführungsbeispielen in Kombination mit einem gekühlten Heissgasgehäuse 7 gezeigt. Der erfindungsgemässe Zellenrotor 8 ist jedoch auch für einen Druckwellenlader 1 geeignet, der kein gekühltes Heissgasgehäuse 7 aufweist.

## Patentansprüche

1. Druckwellenlader (1) zum Verdichten von Frischluft (2a) für einen Verbrennungsmotor, umfassend ein Kaltgasgehäuse (6), ein Heissgasgehäuse (7) sowie ein dazwischen angeordnetes Rotorgehäuse (11), wobei innerhalb des Rotorgehäuses (11) ein rotierbarer Zellenrotor (8) angeordnet ist, und wobei das Heissgasgehäuse (7) einen Hochdruckabgaskanal (4) und einen Niederdruckabgaskanal (5) umfasst, und wobei das Kaltgasgehäuse (6) einen Frischluftkanal (2) und einen Ladeluftkanal (3) umfasst, und wobei der Hochdruckabgaskanal (4), der Niederdruckabgaskanal (5), der Frischluftkanal (2) und der Ladeluftkanal (3) Fluid leitend mit dem Zellenrotor (8) verbunden sind, **dadurch gekennzeichnet, dass** das Kaltgasgehäuse (6) ein Zellenrotorlager (14) umfasst, dass der Zellenrotor (8) mit einer Rotorwelle (12) verbunden ist, dass die Rotorwelle (12) im Zellenrotorlager (14) gelagert ist, und dass der Zellenrotor (8) in Verlaufsrichtung der Rotorwelle (12) geteilt ist und zumindest ein erstes Zellenrotorteil (8a) und ein zweites Zellenrotorteil (8b) umfasst.

2. Druckwellenlader nach Anspruch 1, **dadurch gekennzeichnet, dass** das erste und das zweite Zellenrotorteil (8a, 8b) in Verlaufsrichtung der Rotorwelle (12) gegenseitig beabstandet sind, unter Ausbildung eines Spaltes (18).

3. Druckwellenlader nach Anspruch 2, **dadurch gekennzeichnet, dass** der Spalt (18) eine Breite von maximal 0,5 mm aufweist.

4. Druckwellenlader nach einem der vorhergehenden Ansprüche, **dadurch gekennzeichnet, dass** der Zellenrotor (8) in Verlaufsrichtung der Rotorwelle (12) in der Mitte geteilt ist

5. Druckwellenlader nach einem der vorhergehenden Ansprüche, **dadurch gekennzeichnet, dass** das Heissgasgehäuse (7) ein zweites Zellenrotorlager (14) umfasst, und dass die Rotorwelle (12) des Zellenrotors (8) sowohl im ersten Zellenrotorlager (13) im Kaltgehäuse (6) als auch im zweiten Zellenrotorlager (14) im Heissgasgehäuse (7) gelagert ist.

6. Druckwellenlader nach einem der vorhergehenden Ansprüche, **dadurch gekennzeichnet, dass** das erste Zellenrotorteil (8a) und/oder das zweite Zellenrotorteil (8b) fest mit der Rotorwelle (12) verbunden sind.

7. Druckwellenlader nach einem der Ansprüche 1 bis 4, **dadurch gekennzeichnet, dass** das erste Zellenrotorteil (8a) und/oder das zweite Zellenrotorteil (8b) in Verlaufsrichtung der Rotorwelle (12) verschiebbar sind.

8. Druckwellenlader nach einem der vorhergehenden Ansprüche, **dadurch gekennzeichnet, dass** der Zellenrotor (8) eine Vielzahlzahl von Zellenrotorteilen (8a, 8b) umfasst, welche in Verlaufsrichtung der Rotorwelle (12) nacheinander folgend angeordnet sind, wobei die Vielzahl im Bereich zwischen 3 und 30 liegt.

9. Druckwellenlader nach einem der vorhergehenden Ansprüche, **dadurch gekennzeichnet, dass** das erste Zellenrotorteil (8a) und das zweite Zellenrotorteil (8b) aus einem unterschiedlichen Material sind, wobei das Material des ersten Zellenrotorteils (8a) eine höhere Warmfestigkeit aufweist als das Material des zweiten Zellenrotorteils (8b).

10. Druckwellenlader nach Anspruch 9, **dadurch gekennzeichnet, dass** das erste Zellenrotorteil (8a) aus einem warmfesten, hitzebeständigen Stahl besteht.

11. Druckwellenlader nach Anspruch 9 oder 10, **dadurch gekennzeichnet, dass** das zweite Zellenrotorteil (8b) aus einem Kunststoff besteht.

12. Druckwellenlader nach einem der vorhergehenden Ansprüche, **dadurch gekennzeichnet, dass** das erste Zellenrotorteil (8a) und das zweite Zellenrotorteil (8b) in Verlaufsrichtung der Rotorwelle (12) nacheinander folgend angeordnet sind und eine Übergangsstelle aufweisen, und dass an der Übergangsstelle eine Labyrinthdichtung (26) angeordnet ist.

13. Druckwellenlader nach einem der Ansprüche 1 bis 11, **dadurch gekennzeichnet, dass** das erste Zellenrotorteil (8a) und das zweite Zellenrotorteil (8b) in Verlaufsrichtung der Rotorwelle (12) nacheinander folgend angeordnet sind, und dass das zweite Zellenrotorteil (8b) sowie ein das zweite Zellenrotorteil (8b) umschliessender Abschnitt (11a) des Rotorgehäuses (11) derart gegenseitig angepasst ausgestaltet sind, dass das zweite Zellenrotorteil (8b) sowie der umschliessende Abschnitt (11a) gegenseitig eine Labyrinthdichtung (26) ausbilden.

14. Druckwellenlader nach einem der vorhergehenden Ansprüche, **dadurch gekennzeichnet, dass** das Heissgasgehäuse (7) einen Wärmetauscher (7c) umfasst, und dass der Wärmetauscher (7c) derart ausgestaltet ist, dass der Hochdruckabgaskanal (4) kühlbar ist.

15. Druckwellenlader nach Anspruch 14, **dadurch gekennzeichnet, dass** der Wärmetauscher (7c) derart ausgestaltet ist, dass vorgängig das zweite Zellenrotorlager (13) gekühlt ist und nachfolgend der Hochdruckabgaskanal (4).
